# EUROPEAN PATENT APPLICATION

(11) **EP 4 385 726 A1**
(43) Date of publication of application: **19.06.2024**
(21) Application number: 23215676.0
(22) Date of filing: 11.12.2023
(51) Int. Cl.: B32B 7/023, B32B 7/028, B32B 7/12, B32B 27/08, B32B 27/32, B32B 27/34, C08J 5/18

(54) **PLASTIC BAG FOR VACUUM PACKAGING OF HARD FOODS**

(30) Priority: 15.12.2022 ES 202232087 U
(71) Applicant: Eurobag & Film, S.L., 29006 Málaga Málaga (ES)
(72) Inventor: RUIZ NAVAS, Alejandro, 29006 MÁLAGA (ES)
(74) Representative: Sahuquillo Huerta, Jesús

(57) **Abstract**

Plastic bag for vacuum packaging of hard foods consisting of a film (1) base that is formed leaving one side (5) open for the insertion of the food (4), which is then thermosealed in the packaging process and creates the vacuum, characterised in that the film (1) is made of plastic material and is formed by a layer (2) of low density polyethylene (LDPE) of 50 microns and a layer (3) of bioriented polyamide (BOPA) of 25 microns, extruded separately and glued together by means of an adhesive (6), being the LDPE layer (2) the one in contact with the food (4) and the BOPA layer (3) the one in contact with the outside.

## Description

The present invention is part of the food industry sector, specifically in the field of vacuum packaging systems for foodstuffs.

Vacuum packaging of food is a packaging method that consists of eliminating the air inside a package, creating a vacuum inside the package around the food. In this way, an oxygen-free atmosphere is achieved, which delays the proliferation of bacteria and fungi that need this element to survive, thus enabling a longer shelf life of the product and extending its shelf life. Vacuum packaging is complemented by other preservation methods, as the food can then be refrigerated or frozen.

During the process, the packaging material folds around the food as a result of the lowering of the internal pressure compared to atmospheric pressure. The packaging material must have a very low permeability to gases, especially oxygen, including water vapour, adequate flexibility to conform to the shape of the food and a sufficient level of strength to maintain its integrity during handling.They are usually also transparent in order to visualise the characteristics of the packaged food.

In order to achieve these characteristics, bags made of thermosealed plastic films are normally used, seeking to have the thinnest possible thicknesses in order to reduce production costs and to ensure that the weight of the packaging is also as low as possible in order to make the product price as competitive as possible. Beyond the direct cost reduction, the reduction in thickness allows tax savings and a reduction in transport costs, as well as a reduction in the CO2 footprint.

One of the foods that most frequently use this packaging system are meat products. In the case of products of a certain consistency or hardness, such as boneless and bone-in hams, chops, sausages, etc., it is a challenge to combine the properties of transparency, resistance and flexibility with a low thickness in order to achieve a competitive production cost.The films used in this application usually have several layers of different polymeric materials, being made by the co-extrusion process, and are currently quite thick, between 120 and 160 microns, with densities of around 150 grams per square metre.

Therefore, there is an unmet need in the market for vacuum packaging systems for hard meat products with lower thickness and weight per unit area than at present, with adequate strength and flexibility, while maintaining transparency and low permeability.

The object of the present invention is to obtain a plastic bag for vacuum packaging of food of a certain hardness or consistency with reduced thickness and weight per unit area, having high strength and flexibility and maintaining adequate transparency and low permeability.

The plastic bag for vacuum packaging of hard foods covered by the present invention consists at least of a plastic film made of a 50-micron layer of low-density polyethylene (LDPE) and a 25 micron layer of bioriented polyamide (BOPA), separately extruded and glued together by means of an adhesive.

The LDPE layer is the one in contact with the food and the BOPA layer is the one in contact with the outside.The base film is formed in the form of a bag, leaving one side open for the insertion of the food, which is then thermosealed in the packaging process and the vacuum is created.

With this combination of materials, a thickness of 75 microns and a weight per unit area of 77.4 grams per square metre is achieved, with a tolerance of ±10%, resulting in a product with high strength, flexibility and transparency and low permeability suitable for vacuum packaging of hard foods at a reduced cost.

Throughout the description and the claims, the word "comprises" and variants thereof are not intended to exclude other technical features, components, additives or steps. To those skilled in the art, other objects, advantages and features of the invention will be apparent in part from the invention and in part from the practice of the invention.The following examples and drawings are provided by way of illustration and are not intended to restrict the present invention. Furthermore, the invention covers all possible combinations of particular and preferred embodiments indicated herein.

In order to complement the description herein and to assist in a better understanding of the features of the invention, a set of drawings is attached hereto as an integral part of the said description, in which the following is illustratively and non-limitingly depicted:
Figure 1 shows an axonometric view of a preferred embodiment of the plastic bag for vacuum packaging of hard foodstuffs covered by the present invention.
Figure 2 shows a partial cross-sectional view of a preferred embodiment of the plastic bag for vacuum packaging of hard foodstuffs covered by the present invention.

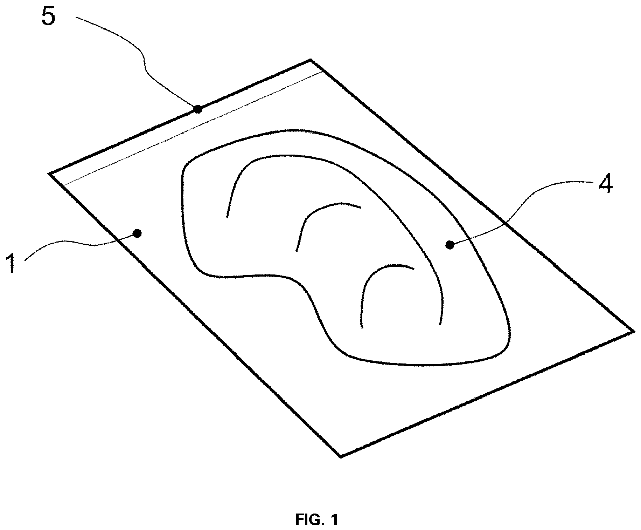

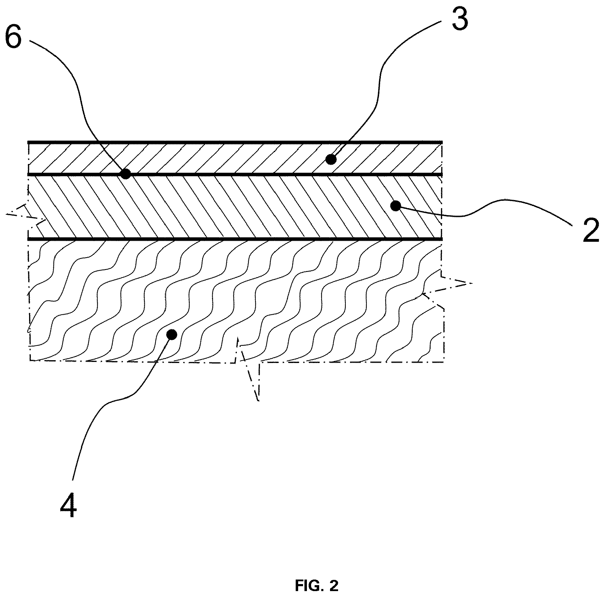

Using the numbering adopted in Figures 1 and 2 of the present document to identify the elements that make up the plastic bag for vacuum packaging of hard foodstuffs covered by the present invention, we proceed to the description of these elements for a preferred embodiment of the invention.

In a preferred embodiment, the plastic bag for vacuum packaging of hard foodstuffs covered by the present invention comprises at least a film (1) of plastic material consisting of a layer (2) of 50-micron low density polyethylene (LDPE) and a layer (3) of 25 micron bioriented polyamide (BOPA), separately extruded and glued together by means of an adhesive (6).

The LDPE layer (2) is the one in contact with the food (4) and the BOPA layer (3) is the one in contact with the outside. The base film (1) is formed in the shape of a bag, leaving one side (5) open for the insertion of the food (4), which is then thermosealed in the packaging process and the vacuum is created.

## Claims

1. Plastic bag for vacuum packaging of hard foods consisting of a film (1) base that is formed leaving one side (5) open for the insertion of the food (4), which is then thermosealed in the packaging process and creates the vacuum, **characterised in that** the film (1) is made of plastic material and is formed by a layer (2) of low density polyethylene (LDPE) of 50 microns and a layer (3) of bioriented polyamide (BOPA) of 25 microns, extruded separately and glued together by means of an adhesive (6), being the LDPE layer (2) the one in contact with the food (4) and the BOPA layer (3) the one in contact with the outside.
